# EUROPÄISCHE PATENTSCHRIFT

(11) **EP 0 673 979 B1**
(45) Veröffentlichungstag und Bekanntmachung des Hinweises auf die Patenterteilung: **30.08.2000**
(21) Anmeldenummer: 95810176.8
(22) Anmeldetag: 16.03.1995
(51) Int. Cl.: C09B 69/00

(54) **Cyaniminogruppen enthaltende Fluoreszenzfarbstoffe**
Fluorescent dyestuffs having cyanimino groups
Colorants fluorescents ayant des groupes cyanimino

(30) Priorität: 25.03.1994 CH 91694
(43) Veröffentlichungstag der Anmeldung: 27.09.1995
(73) Patentinhaber: Ciba Specialty Chemicals Holding Inc., 4057 Basel (CH)
(72) Erfinder: Zambounis, John S., Dr., CH-3280 Murten (CH); Hao, Zhimin, Dr., CH-1723 Marly (CH); Iqbal, Abul, Dr., CH-1732 Arconciel (CH)

(56) Entgegenhaltungen:
- EP-A- 0 017 214
- EP-A- 0 042 531
- JP-A- 4 338 761

## Beschreibung

Die vorliegende Erfindung betrifft neue Cyaniminogruppen enthaltende Chromophore, ihre Herstellung und ihre Verwendung zum Färben von hochmolekularem organischem Material.

Aus EP 17 214 sind Farbstoffe bekannt, die in einem zweistufigen Verfahren durch Kondensation von Diiminoisoindolin mit einem Cyanacetamid und anschliessend mit Barbitursäurecyanimid hergestellt werden. Diese Methode lässt sich jedoch nicht zur Herstellung von Cyaniminoderivaten hochwertiger Pigmente anwenden, da entweder die Cyanimino-Gruppen bei der Synthese dieser Pigmente mindestens zum Teil unerwünschte Reaktionen, beispielsweise Hydrolyse, eingehen würden, oder die Synthese der Pigmente durch die Anwesenheit der Cyanimidogruppe erschwert oder sogar verunmöglicht würde.

In Angew. Chem. 96, 437, 1984 und 102, 220, 1990, beschrieben S. Hünig et al. eine Methode zur Umwandlung von löslichen Ketonen und Thiolactonen in entsprechende N-Cyanimine. Es ist nun gefunden worden, dass überraschenderweise auch unlösliche Pigmente, die mindestens einen Stickstoff mit einer unmittelbar benachbarten oder konjugierten Carbonylgruppe enthalten, wie z.B. die bekannten Pigmente der Perylencarbonsäureimid-, Chinacridon-, Isoindolin-, Indigoid-, Azo-, Benzodipyrrolon-, Benzodifuranon-, Furanofuran-, Pyrrolopyrrol- und Bianthrachinon-Reihe, in analoger Weise mit guter Ausbeute umgewandelt werden können.

EP-A 42531 beansprucht Isoindoleninderivate der Formel 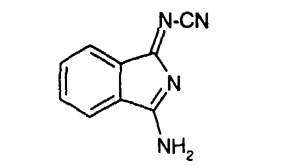 als Zwischenprodukte zur Herstellung von Farbstoffen.

JP-A2 04/338761 beschreibt Photorezeptoren, in denen u.a. die DPP-Verbindung der Formel 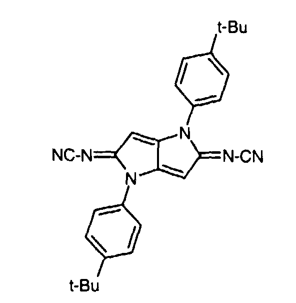 als ladungstransportierende Verbindung in einer lichtempfindlichen Schicht verwendet wird.

Durch die vorliegende Erfindung wird eine allgemeine Methode erschlossen, um ausgehend von weit verbreiteten und zumeist leicht zugänglichen hochwertigen Pigmenten, welche eine oder mehrere Oxo-Gruppen besitzen, die entsprechenden Cyaniminoderivate herzustellen. Ganz überraschend zeichnen sich die so erhaltenen neuen Produkte durch eine unerwartet hohe Festkörperfluoreszenz aus.

Die vorliegende Erfindung betrifft demnach Verbindungen aus der Reihe der Perylencarbonsäureimid-, Chinacridon-, Azo-, Benzodipyrrolon-, Benzodifuranon-, Furanofuran- und Pyrrolo[2,5-b]pyrrol-Chromophore der Formel X 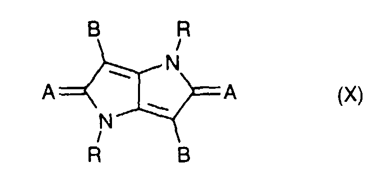 worin B eine Gruppe der Formel 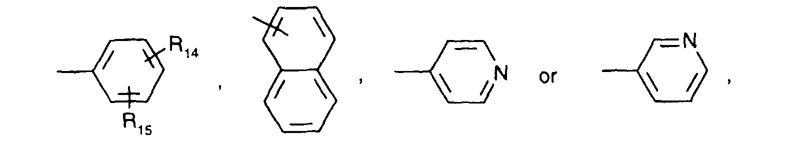 ist, worin R₁₄ und R₁₅ unabhängig voneinander Wasserstoff, Chlor, Brom, C₁-C₄Alkyl, C₁-C₄Alkoxy, C₁-C₆Alkylamino, CN oder Phenyl bedeuten,
enthaltend mindestens eine Gruppierung der Formel I 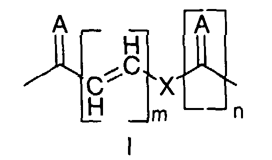 worin A jeweils N-CN oder O bedeuten kann, jedoch mindestens einmal N-CN bedeuten muss, X -N(R)-, -O- oder -S-, R Wasserstoff, C₁-C₁₈Alkyl, unsubstituiertes oder durch Halogen oder C₁-C₄Alkyl substituiertes Phenyl, Benzyl oder Phenethyl und m und n unabhängig voneinander Null oder 1 bedeuten,
sowie Indigoderivate der Formeln VIa oder VIb 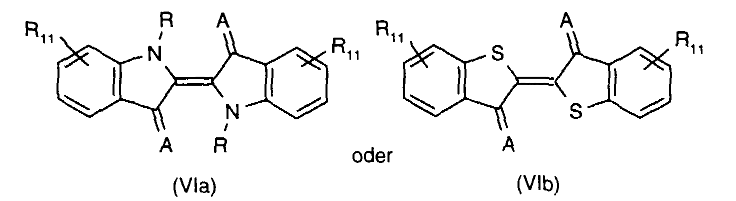 worin R₁₁ Wasserstoff, CN, C₁-C₄Alkyl, C₁-C₄Alkoxy oder Halogen bedeutet,
Isoindoline der Formeln IV oder V 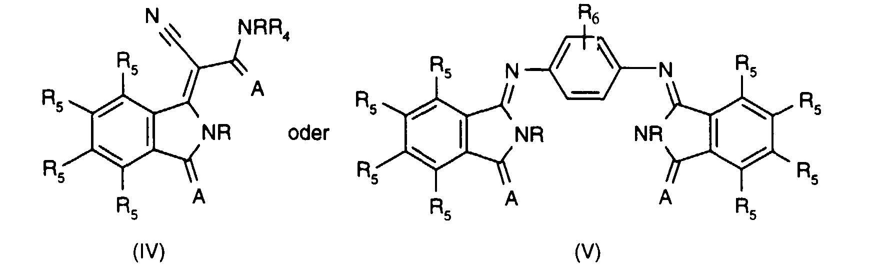 worin R₄ eine Gruppe 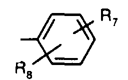 ist,
- R₅: Wasserstoff oder Chlor bedeutet,
- R₆: Wasserstoff, Methyl oder Chlor bedeutet,
- R₇, R₈, R₉ und R₁₀: unabhängig voneinander Wasserstoff, C₁-C₁₈Alkyl, C₁-C₄Alkoxy, Halogen oder Trifluormethyl bedeuten,
sowie
bianthrachinoide Verbindungen der Formel XI

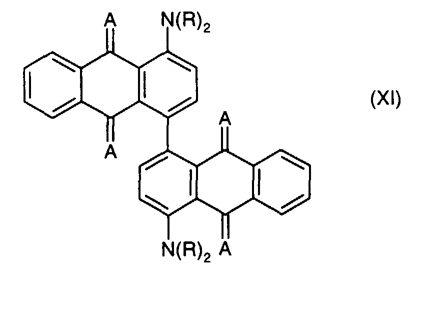

Bei den Perylencarbonsäurediimid-, Chinacridon-, Isoindolin-, Indigoid-, Azo-, Benzodipyrrolon-, Benzodifuranon-, Furanofuran-, Pyrrolopyrrol- und Bianthrachinon-Chromophoren handelt es sich um Pigmente bekannter Grundstruktur, wie zum Beispiel 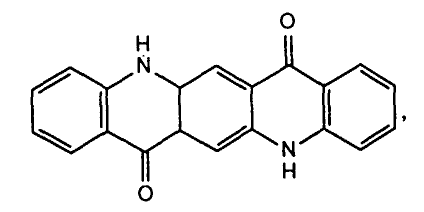 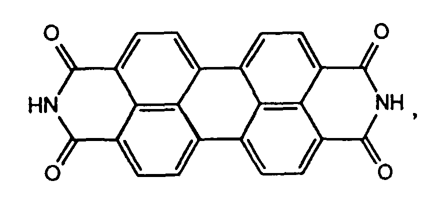 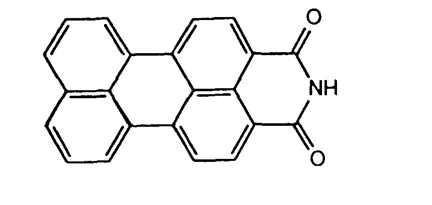 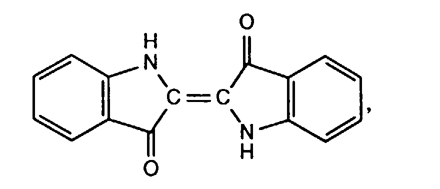 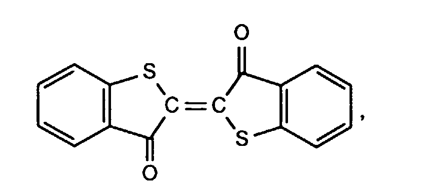 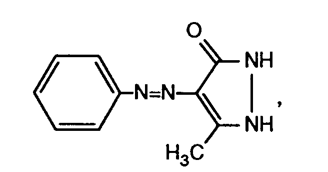 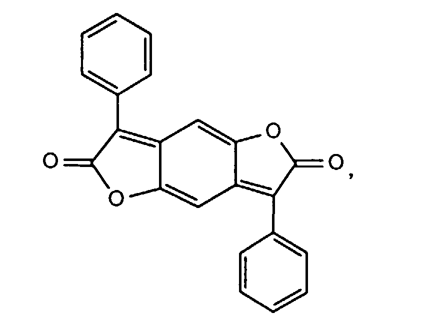 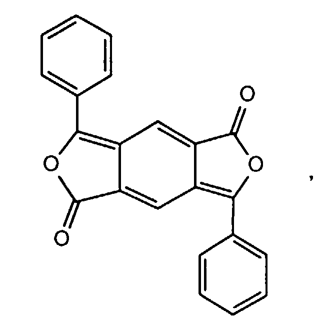 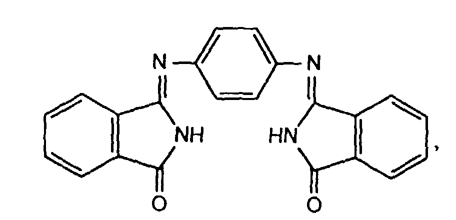 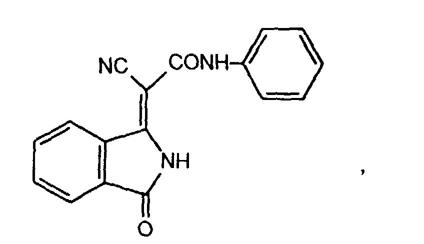 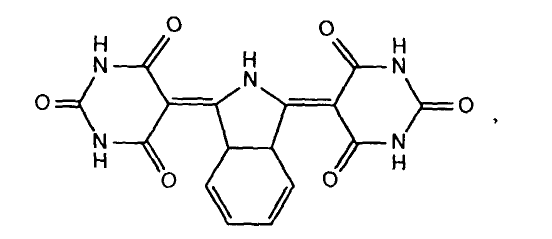 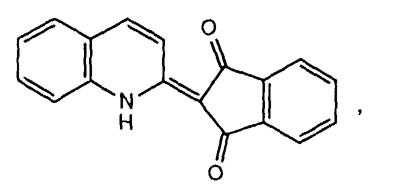 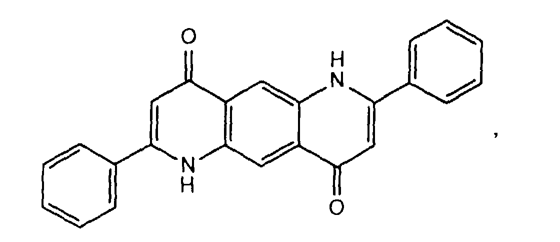 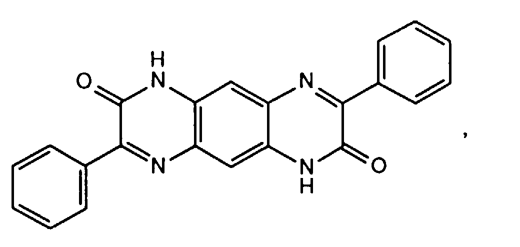 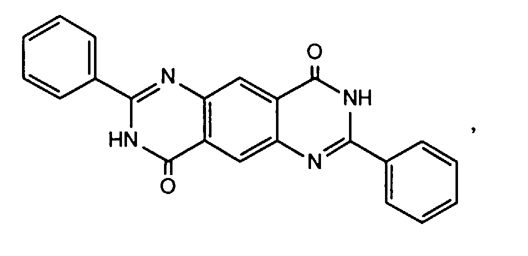 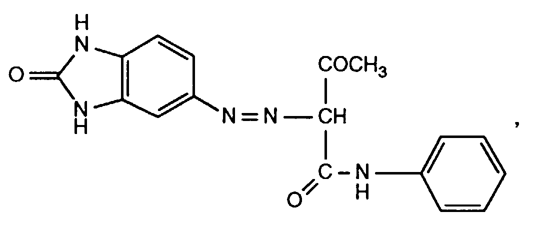 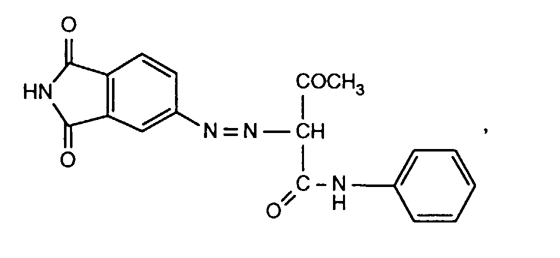 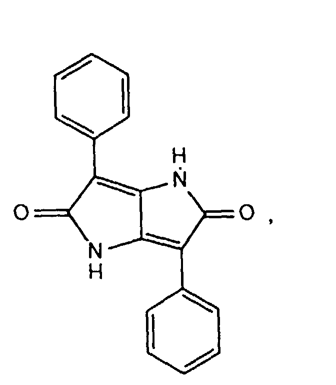 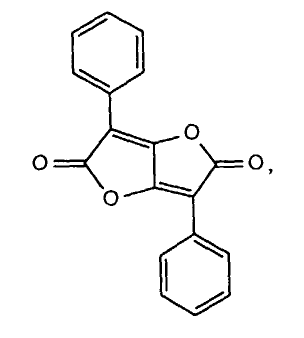 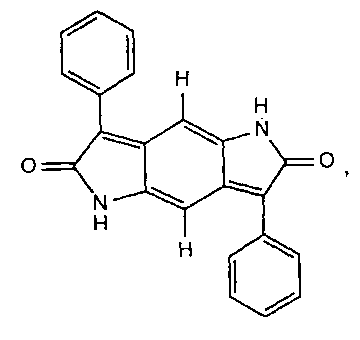 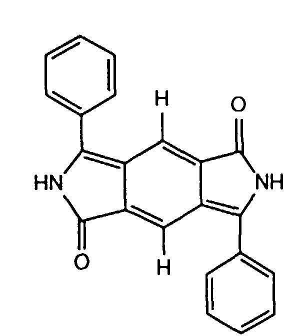 oder 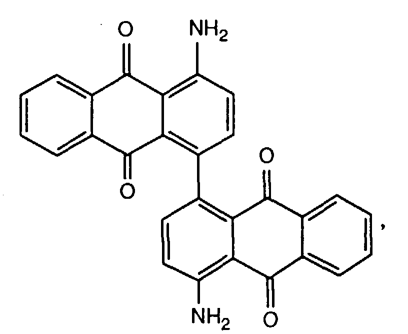 oder um deren Derivate, welche einen oder mehreren Substituenten aus der Gruppe Halogen, Alkyl, Alkoxy oder Alkylamino, z.B. C₁-C₁₈-Alkyl, C₁-C₄-Alkoxy oder C₁-C₆-Alkylamino, tragen.
Bedeuten etwaige Substituenten Halogen, dann handelt es sich z.B. um Jod, Fluor, insbesondere Brom und bevorzugt Chlor;
Bedeuten etwaige Substituenten Alkyl, so handelt es sich bei C₁-C₄-Alkyl beispielsweise um Methyl, Ethyl, n-Propyl, Isopropyl, n-Butyl, sec.-Butyl, tert.-Butyl, bei C₁-C₆-Alkyl zusätzlich z.B. um n-Amyl, tert.-Amyl, Hexyl und bei C₁-C₁₈-Alkyl zusätzlich z.B. um Heptyl, Octyl, 2-Ethylhexyl, Nonyl, Decyl, Dodecyl, Tetradecyl, Hexadecyl oder Octadecyl;
C₁-C₄-Alkoxy bedeutet z.B. Methoxy, Ethoxy, n-Propoxy, Isopropoxy, n-Butyloxy oder tert.-Butyloxy.

C₁-C₆-Alkylamino bedeutet z.B. Methylamino, Ethylamino, Propylamino oder Hexylamino.

X in Formel I ist bevorzugt -N(R)-, wobei R die oben angegebene Bedeutung hat.

Bevorzugte erfindungsgemässe Verbindungen sind
a) Perylencarbonsäureimide der Formeln 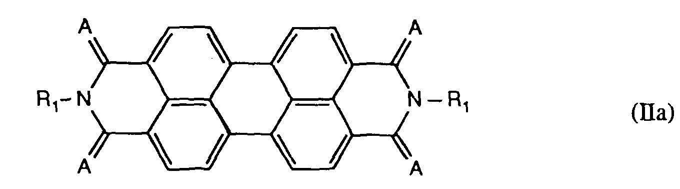 oder 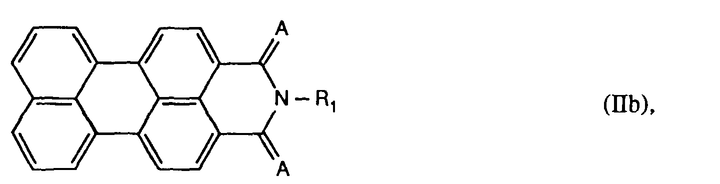 worin R₁ Wasserstoff, C₁-C₆-Alkyl, unsubstituiertes oder durch Halogen oder C₁-C₄-Alkyl substituiertes Phenyl, Benzyl oder Phenethyl bedeutet, und A die oben angegebene Bedeutung hat,
b) Chinacridone der Formel 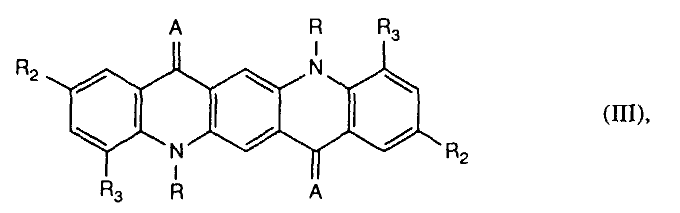 worin R₂ und R₃ unabhängig voneinander Wasserstoff, Halogen, C₁-C₁₈-Alkyl, C₁-C₄-Alkoxy oder Phenyl sind und A und R die oben angegebene Bedeutung haben,
c) Isoindoline der Formeln 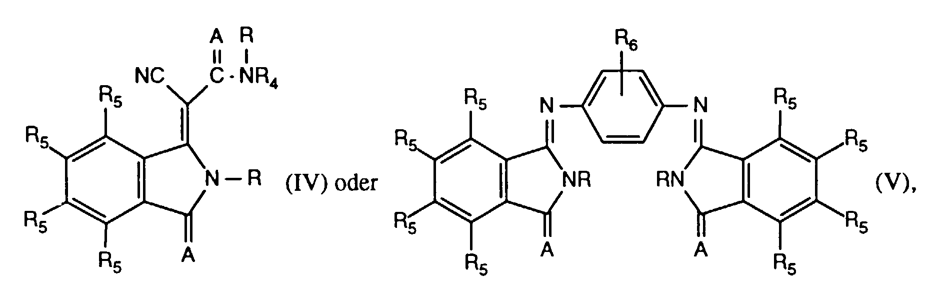 worin R₄ eine Gruppe 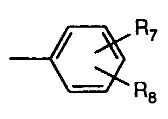 ist,
   - R₅: Wasserstoff oder Chlor bedeutet,
   - R₆: Wasserstoff, Methyl oder Chlor bedeutet,
   - R₇, R₈, R₉ und R₁₀: unabhängig voneinander Wasserstoff, C₁-C₁₈-Alkyl, C₁-C₄-Alkoxy, Halogen oder Trifluormethyl bedeuten,
   - und A und R: die oben angegebene Bedeutung haben,
d) Indigoderivate der Formel 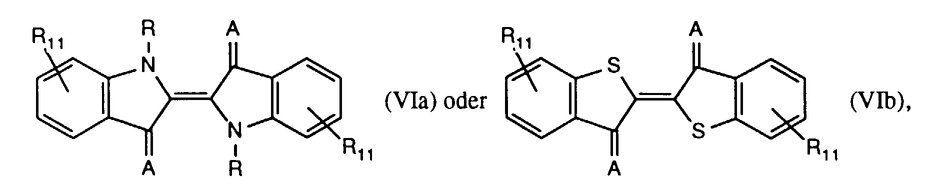 worin R₁₁ Wasserstoff, CN, C₁-C₄-Alkyl, C₁-C₄-Alkoxy oder Halogen bedeutet, und A und R die oben angegebene Bedeutung haben,
e) Benzimidazolon-Azoverbindungen der Formel 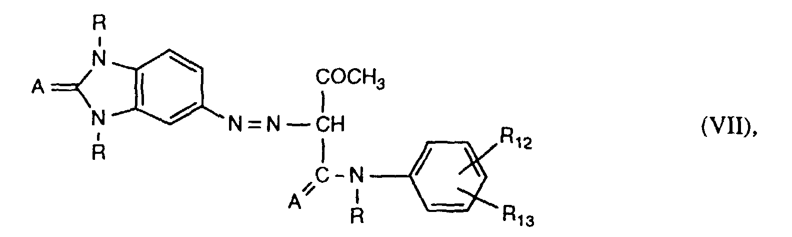 worin R₁₂ und R₁₃ unabhängig voneinander Wasserstoff, Halogen, C₁-C₄-Alkyl oder C₁-C₄-Alkoxy sind,
   und A und R die oben angegebene Bedeutung haben,
f) Benzodipyrrolone der Formeln 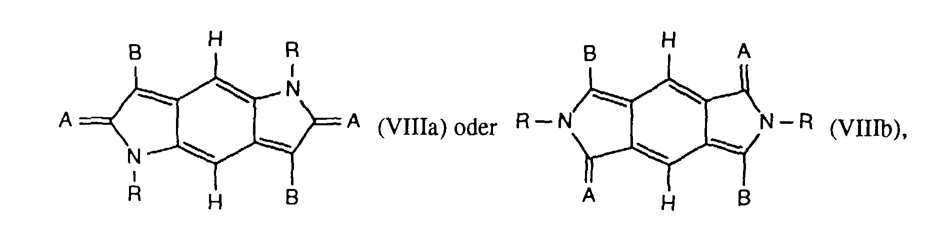 worin B eine Gruppe der Formel 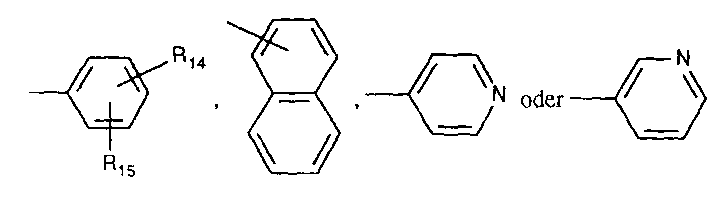 ist,
   worin R₁₄ und R₁₅ unabhängig voneinander Wasserstoff, Chlor, Brom, C₁-C₄-Alkyl, C₁-C₄-Alkoxy, C₁-C₆-Alkylamino, CN oder Phenyl bedeuten,
   und A und R die oben angegebene Bedeutung haben,
g) Benzodifuranone der Formeln 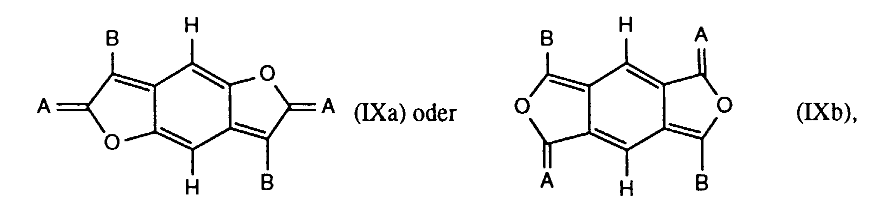 worin A und B die oben angegebene Bedeutung haben,
h) Pyrrolo[2,5-b]pyrrole der Formel 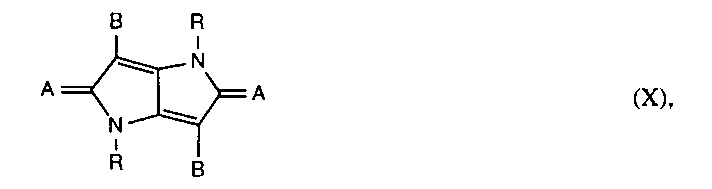 worin B eine Gruppe der Formel 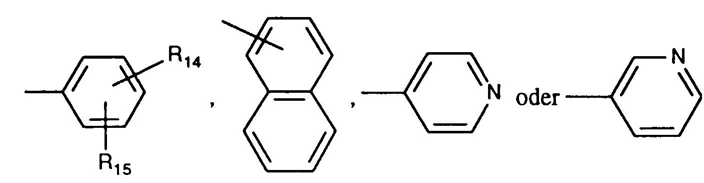 ist,
   worin R₁₄ und R₁₅ unabhängig voneinander Wasserstoff, Chlor, Brom, C₁-C₄-Alkyl, C₁-C₄-Alkoxy, C₁-C₆-Alkylamino, CN oder Phenyl bedeuten,
   und A und R die oben angegebene Bedeutung haben,
   oder
j) Bianthrachinoide Verbindungen der Formel 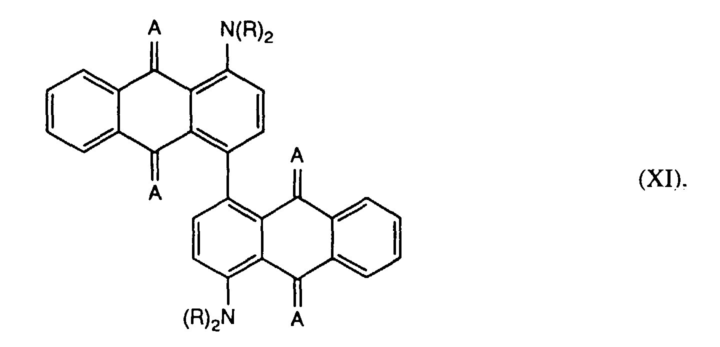 worin A und R die oben angegebene Bedeutung haben.

Besonders bevorzugt sind
1) Perylencarbonsäureimide der Formeln 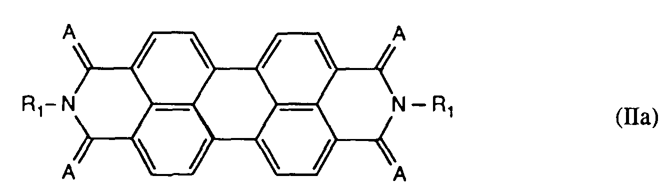 oder 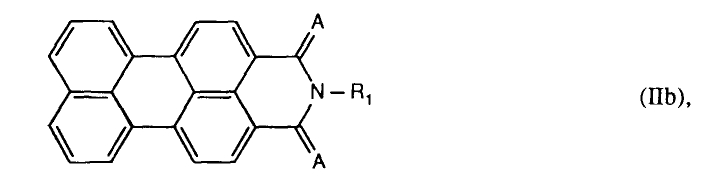 worin R₁ Wasserstoff, C₁-C₆-Alkyl, unsubstituiertes oder durch Halogen oder C₁-C₄-Alkyl substituiertes Phenyl, Benzyl oder Phenethyl bedeutet, und A die oben angegebene Bedeutung hat,
2) Chinacridone der Formel 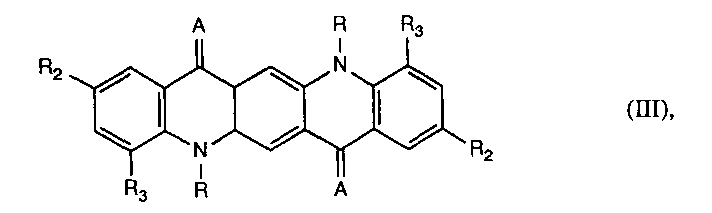 worin R₂ und R₃ unabhängig voneinander Wasserstoff, Halogen, C₁-C₁₈-Alkyl, C₁-C₄-Alkoxy oder Phenyl sind und A und R die oben angegebene Bedeutung haben,
3) Isoindoline der Formeln 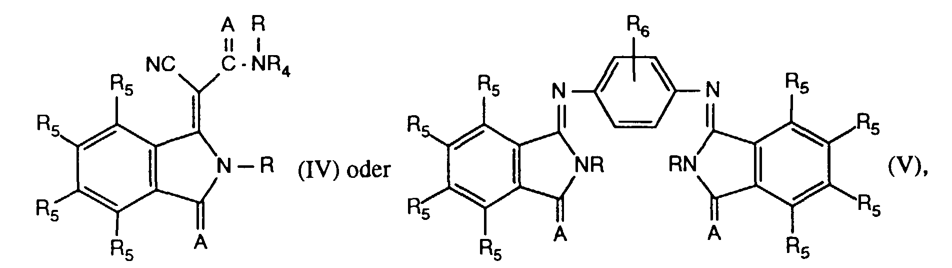 worin R₄ eine Gruppe 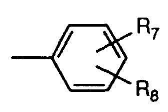 ist,
   - R₅: Wasserstoff oder Chlor bedeutet,
   - R₆: Wasserstoff, Methyl oder Chlor bedeutet,
   - R₇, R₈, R₉ und R₁₀: unabhängig voneinander Wasserstoff, C₁-C₁₈-Alkyl, C₁-C₄-Alkoxy, Halogen oder Trifluormethyl bedeuten,
   - und A und R: die oben angegebene Bedeutung haben,
4) Indigoderivate der Formel 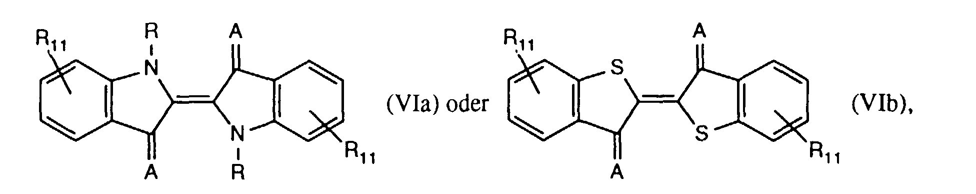 worin R₁₁ Wasserstoff, CN, C₁-C₄-Alkyl, C₁-C₄-Alkoxy oder Halogen bedeutet, und A und R die oben angegebene Bedeutung haben,
5) bianthrachinoide Verbindungen der Formel 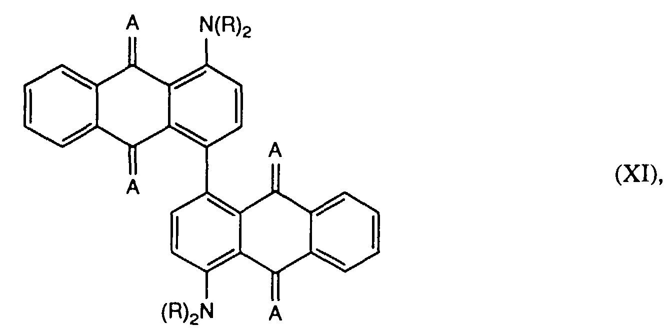 worin A und R die oben angegebene Bedeutung haben, und insbesondere
   i) Perylencarbonsäureimide der Formeln 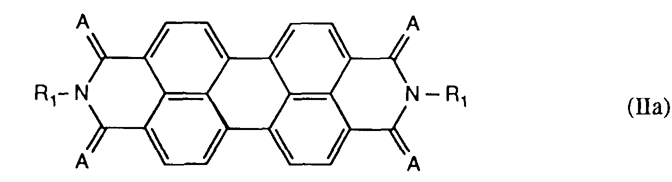 oder 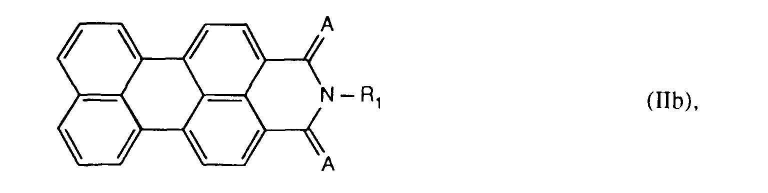 worin R₁ Wasserstoff, C₁-C₆-Alkyl, unsubstituiertes oder durch Halogen oder C₁-C₄-Alkyl substituiertes Phenyl bedeutet, und A die oben angegebene Bedeutung hat,
   ii) Chinacridone der Formel 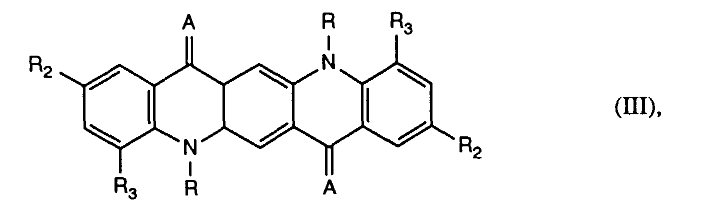 worin R₂ und R₃ unabhängig voneinander Wasserstoff, Halogen, C₁-C₄-Alkyl, C₁-C₄-Alkoxy oder Phenyl sind und A und R die oben angegebene Bedeutung haben, oder
   iii) Indigoderivate der Formel 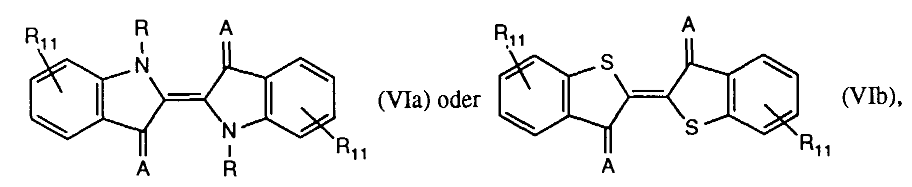 worin R₁₁ Wasserstoff, C₁-C₄-Alkyl, C₁-C₄-Alkoxy oder Halogen bedeutet, und A und R die oben angegebene Bedeutung haben.

Die Herstellung der erfindungsgemässen Verbindungen erfolgt durch Umsetzung einer Verbindung aus der Reihe der Perylencarbonsäureimid-, Chinacridon-, Azo-, Benzodipyrrolon-, Benzodifuranon-, Furanofuran- und Pyrrolo[2,5-b]pyrrol-Chromophore der Formel X, enthaltend mindestens eine Gruppierung der Formel
la 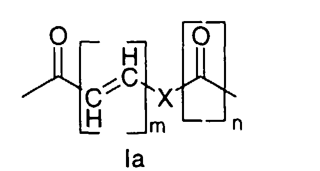 sowie Indigoderivate der Formeln VIa' oder VIb' 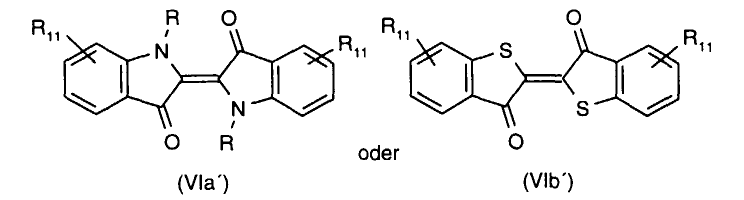 Isoindoline der Formeln IV' oder V' 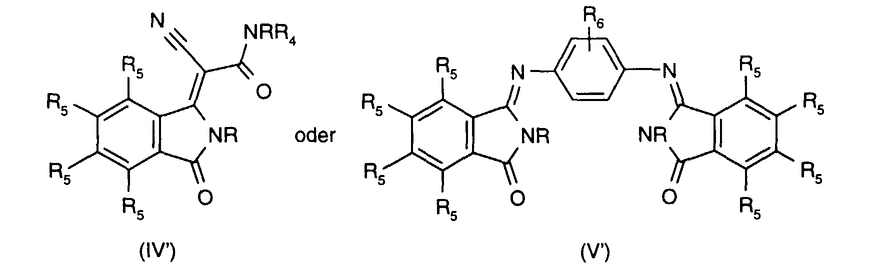 sowie bianthrachinoide Verbindungen der Formel XI' 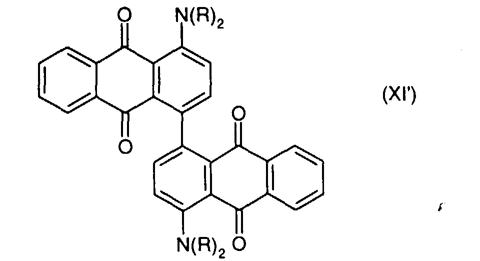 im gewünschten Molverhältnis mit einer Verbindung der Formel XII oder XIII 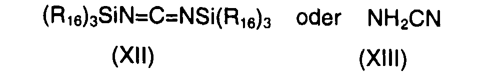 wobei R₁₆ C₁-C₆Alkyl bedeutet,
in Gegenwart einer Lewis-Säure als Katalysator in einem aprotischen organischen Lösungsmittel, bei Temperaturen zwischen 10 und 150°C, bevorzugt zwischen 50 und 100°C. Die Dauer der Umsetzung variiert je nach Ausgangsprodukt von etwa 30 Minuten bis etwa 200 Stunden.

Die von Hünig et al. beschriebene Methode betrifft, wie bereits erwähnt, ausschliesslich die Umsetzung von löslichen Ausgangsprodukten. Dass die Reaktion auch ausgehend von unlöslichen Pigmenten so erfolgreich verlaufen könnte, war nicht zu erwarten. Dieses neue Herstellungsverfahren ist demnach auch Gegenstand der vorliegenden Erfindung.

Die Cyaniminogruppen liefernde Verbindung XII oder XIII wird zweckmässig in einem ca. 10- bis 20-fachen Überschuss, bezogen auf das Pigment, eingesetzt.

Geeignete, als Katalysator einzusetzende Lewis-Säuren sind beispielsweise CsF, BF₃, ZrCl₄ und insbesondere TiCl₄.

Als Lösungsmittel eignen sich beispielsweise Ether, wie Tetrahydrofuran oder Dioxan, oder Glykoläther, wie Ethylenglykol-methyläther, Ethylenglykol-ethylether, Diethylenglykol-monomethylether oder Diethylenglykol-monoethylether, ferner dipolar-aprotische Lösungsmittel, wie Acetonitril, Benzonitril, N,N-Dimethylformamid, N,N-Dimethylacetamid, Nitrobenzol, N-Methylpyrrolidon, halogenierte aliphatische oder aromatische Kohlenwasserstoffe, wie Trichlorethan, Benzol oder durch Alkyl, Alkoxy oder Halogen substituiertes Benzol, wie Toluol, Xylol, Anisol oder Chlorbenzol oder aromatische N-Heterocyclen, wie Pyridin, Picolin oder Chinolin. Bevorzugte Lösungsmittel sind z.B. Tetrahydrofuran, N,N-Dimethylformamid, N-Methylpyrrolidon. Die genannten Lösungsmittel können auch als Mischungen eingesetzt werden. Zweckmässigerweise verwendet man 5-20 Gew.-Teile Lösungsmittel auf 1 Gew.-Teil der Reaktionsteilnehmer.

Bei den umzusetzenden Pigmenten aus der Perylencarbonsäurediimid-, Chinacridon-, Isoindolin-, Indigoid-, Azo-, Benzodipyrrolon-, Pyrrolo[2,5-b]pyrrol- und Bianthrachinon-Reihe handelt es sich um bekannte Pigmente beispielsweise mit den oben erwähnten Grundstrukturen. Sollten einige noch neu sein, so können sie in Analogie zu allgemein bekannten Methoden hergestellt werden.

Bei den Verbindungen der Formeln XII und XIII handelt es sich um bekannte und im Handel erhältliche Verbindungen.

Die erfindungsgemässen Verbindungen eignen sich zur Färbung von hochmolekularem organischem Material in der Masse.

Je nach Art ihrer Substituenten und des zu färbenden Polymeren können die erfindungsgemässen Verbindungen als polymerlösliche Farbstoffe für z.B. Polystyrol, Polyamide, ABS und insbesondere lineare Polyester, oder auch als Pigmente für hochmolekulares organisches Material verwendet werden. Im Vergleich zu den entsprechenden nur Carbonylgruppen enthaltenden Verbindungen zeichnen sich die erfindungsgemässen Verbindungen mit den Cyanamingruppen insbesondere durch eine überraschend hohe Festkörperfluoreszenz sowie durch eine koloristisch interessante bathochrome Nuancenverschiebung aus.

Als lineare Polyester, zu deren Einfärbung die erfindungsgemässen polymerlöslichen Verbindungen besonders geeignet sind, seien insbesondere jene erwähnt, die durch Polykondensation von Terephthalsäure oder deren Estern mit Glykolen der Formel HO-(CH₂)ₙ-OH, worin n die Zahl 2-10 bedeutet, oder mit 1,4-Di-(hydroxymethyl)-cyclohexan oder durch Polykondensation von Glykolethern von Hydroxybenzoesäuren, beispielsweise p-(β-Hydroxyethoxy)-benzoesäure erhalten werden. Der Begriff lineare Polyester umfasst auch Kopolyester, die durch teilweisen Ersatz des Glykols durch ein anderes Diol erhalten werden. Von besonderem Interesse sind jedoch die Polyethylenterephthalate.

Die zu färbenden linearen Polyester werden zweckmässig in Form von Pulver, Schnitzeln oder Granulaten mit dem Farbstoff innig vermischt. Dies kann beispielsweise durch Panieren der Polyesterteilchen mit dem fein verteilten trockenen Farbstoffpulver oder durch Behandeln der Polyesterteilchen mit einer Lösung bzw. Dispersion des Farbstoffes in einem organischen Lösungsmittel und nachheriger Entfernung des Lösungsmittels geschehen.

Zur Nuanceeinstellung können Gemische der erfindungsgemässen Verbindungen sowie Gemische einer oder mehrerer erfindungsgemässer Verbindungen mit Dispersionsfarbstoffen verwendet werden.

Schliesslich kann die erfindungsgemässe Verbindung auch direkt dem geschmolzenen Polyester oder auch vor oder während der Polykondensation des Polyäthylenterephthalates zugegeben werden.

Das Verhältnis von Farbstoff zu Polyester kann, je nach der gewünschten Farbstärke, innerhalb weiter Grenzen schwanken. Im allgemeinen empfiehlt sich die Verwendung von 0,01-3 Teilen Farbstoff auf 100 Teile Polyester. Die so behandelten Polyesterteilchen werden nach bekannten Verfahren im Extruder geschmolzen und zu Gegenständen, insbesondere Folien oder Fasern, ausgepresst oder zu Platten gegossen.

Im Falle der Verwendung als Pigmente ist es vorteilhaft, die bei der Synthese anfallenden Produkte in eine feindisperse Form überzuführen. Dies kann auf verschiedene Weise geschehen, beispielsweise:
a) durch Mahlen oder Kneten, zweckmässig in Gegenwart von Mahlhilfsmitteln, wie anorganischen oder organischen Salzen mit oder ohne Zusatz organischer Lösungsmittel, wobei die Hilfsmittel nach dem Mahlen wie üblich entfernt werden, beispielsweise lösliche anorganische Salze durch Waschen mit Wasser oder wasserunlösliche organische Lösungsmittel durch Wasserdampfdestillation,
b) durch Umfällen aus Schwefelsäure, Methansulfonsäure, Trichloressigsäure oder Polyphosphorsäure.
c) im Falle von Produkten, in denen R Wasserstoff ist, durch Überführen des Rohpigments in ein Alkali- oder Aminsalz und Hydrolyse des letzteren. Dies geschieht beispielsweise durch Anrühren des Rohpigments mit einer Base, beispielsweise mit einem Alkalihydroxid, oder -alkoholat, Ammoniak oder einem Amin in einem polaren organischen Lösungsmittel wie Dimethylformamid, wobei das Pigment ganz oder teilweise in Lösung geht. Durch Hydrolyse, vorzugsweise durch Ansäuern der gegebenenfalls filtrierten Lösung wird das Pigment ausgefällt.

Es kann sich als zweckmässig erweisen, die nach a), b) oder c) behandelten Pigmente mit organischen Lösungsmitteln, vorzugsweise mit solchen, die über 100°C sieden, nachzubehandeln.

Als besonders geeignet erweisen sich durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone wie Cyclohexanon, Ether wie Ethylenglykolmonomethyl- oder monoethylether, Amide wie Dimethylformamid oder N-Methyl-pyrrolidon, sowie Dimethylsulfoxid, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen, oder aliphatischen Aminen oder mit flüssigem Ammoniak durchführen.

Je nach Verwendungszweck erweist es sich als vorteilhaft, die Pigmente als solche (Toner) oder in Form von Präparaten zu verwenden.

Das hochmolekulare organische Material kann natürlicher oder künstlicher Herkunft sein. Es kann sich z.B. um Naturharze oder trocknende Öle, Kautschuk oder Casein oder um abgewandelte Naturstoffe, wie Chlorkautschuk, ölmodifizierte Alkydharze, Viscose, um Celluloseether oder Ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt, Polyolefine, wie Polyethylen, Polypropylen, oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS oder EVA.

Aus der Reihe der Polyadditions- und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester und Polyamide oder Silikone, genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch in Form ihrer Monomeren oder im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den erfindungsgemässen Verbindungen erfolgt beispielsweise derart, dass man ein solches Pigment gegebenenfalls in Form von Masterbatches diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den erfindungsgemässen Verbindungen noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die erfindungsgemässen Verbindungen gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch grosse Farbstärke, hohe Sättigung, gute Dispergierbarkeit, gute Überlackier-, Migrations-, Hitze-, Licht- und Wetterechtheit sowie durch einen guten Glanz und gutes IR-Remissionsverhalten aus. Ganz charakteristisch ist, wie bereits erwähnt, die überraschend hohe Festkörperfluoreszenz.

Die erfindungsgemässen Verbindungen können auch als Toner für Elektro- und Magnetographie verwendet werden. Ferner können sie als Farbmittel für Drucktinten, insbesondere für Tintenstrahl- und Sicherheitsdruck, eingesetzt werden.

Wenn die erfindungsgemässen Verbindungen in den angewandten Polymeren gelöst vorliegen, zeichnen sie sich ebenfalls durch reinen Farbton, grosse Farbstärke, gute Echtheiten, insbesondere Licht- und Sublimierechtheit, und ausserdem durch hohe Fluoreszenz aus. Sie eignen sich in Sonnenenergie-Kollektoren und zur Herstellung von Laser-Strahlen. Ausserdem sind sie als organische Photoleiter für Kopiermaschinen und Laserdrucker sowie als Aktivkomponenten von Elektrolumineszenz-Elementen gut geeignet.

Die nachfolgenden Beispiele dienen zur Erläuterung der Erfindung.

### Beispiel 1:

Zu einer Lösung von 30,4 ml TiCl₄ in 175 ml 1,2-Dichlorbenzol, unter Stickstoff, wird eine Lösung von 62,7 ml Bis-(trimethylsilyl)-carbodiimid in 175 ml 1,2-Dichlor-benzol gegeben. Zur entstandenen roten Lösung wird nach 30 Minuten eine Mischung aus 9,4 g N,N'-Dimethyl-chinacridon in 175 ml 1,2-Dichlorbenzol gegeben. Die dunkle Suspension wird 72 Stunden bei 60°C gerührt und danach auf 11 Eiswasser gegossen. Die entstandene Suspension wird filtriert, der Niederschlag mit Wasser und anschliessend mit Ethanol gewaschen und an der Luft getrocknet. Man erhält 2,7 g (25 % d.Th.) eines kristallförmigen Produktes der Formel

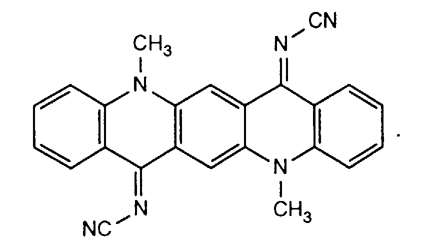

### Beispiel 2:

2,8 ml Bis-(trimethylsilyl)-carbodiimid werden in 5 ml 1,2-Dichlorbenzol gelöst und dann einer Lösung von 1,4 ml TiCl₄ in 10 ml 1,2-Dichlorbenzol zugegeben. Die erhaltene rote Lösung wird 30 Minuten bei Zimmertemperatur gerührt, danach wird eine Suspension von 0,5 g eines Pigments der Formel 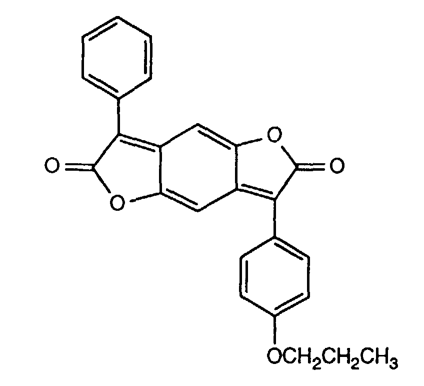 in 10 ml 1,2-Dichlorbenzol zugegeben. Die dunkelbraune Suspension wird 20 Stunden bei 60°C gerührt und dann mit 100 ml Wasser verdünnt. Die organische Phase wird abgetrennt und das Lösungsmittel im Vakuum abdestilliert. Der dunkle feste Rückstand wird in 50 ml Wasser aufgeschlämmt, eine Stunde bei Zimmertemperatur gerührt, filtriert, mit Wasser gewaschen und im Vakuumtrockenschrank getrocknet. Danach wird es mit Essigsäureethylester-Hexan (1:9) in einer Kolonne chromatographisch gereinigt. Man erhält 0,153 g (27,3 % d.Th.) eines violetten Produktes der Formel

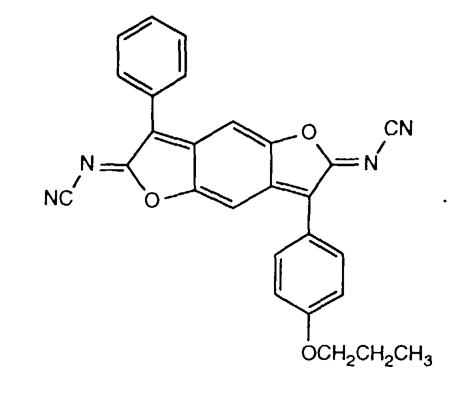

### Beispiele 3-7:

Analog den Beispielen 1 und 2 werden ausgehend von den entsprechenden Oxo-Pigmenten folgende Verbindungen hergestellt:

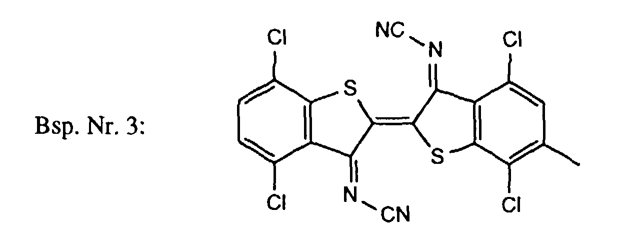

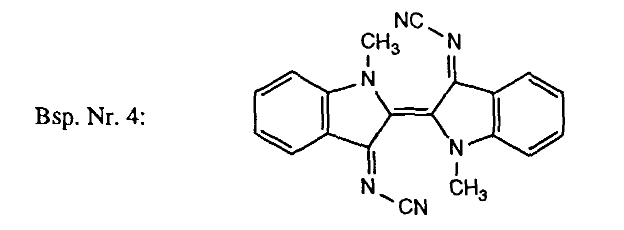

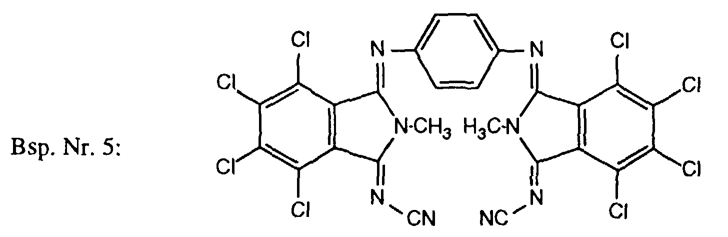

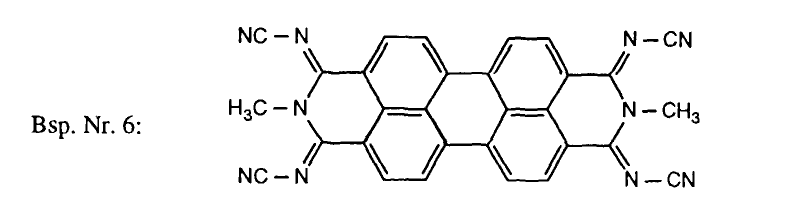

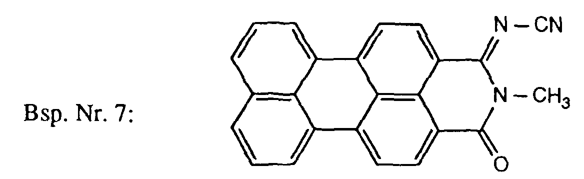

## Patentansprüche

1. Verbindungen aus der Reihe der Perylencarbonsäureimid-, Chinacridon-, Azo-, Benzodipyrrolon-, Benzodifuranon-, Furanofuran- und Pyrrolo[2,5-b]pyrrol-Chromophore der Formel X 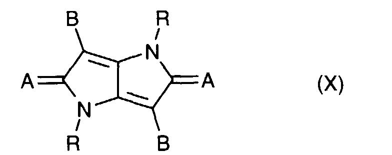 worin B eine Gruppe der Formel 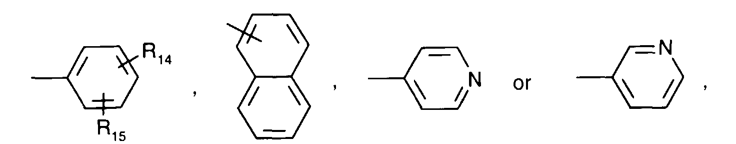 ist, worin R₁₄ und R₁₅ unabhängig voneinander Wasserstoff, Chlor, Brom, C₁-C₄Alkyl, C₁-C₄Alkoxy, C₁-C₆Alkylamino, CN oder Phenyl bedeuten,
enthaltend mindestens eine Gruppierung der Formel I 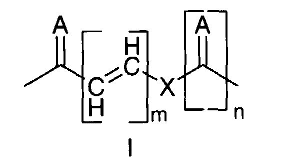 worin A jeweils N-CN oder O bedeuten kann, jedoch mindestens einmal N-CN bedeuten muss, X -N(R)-, -O- oder -S-, R Wasserstoff, C₁-C₁₈Alkyl, unsubstituiertes oder durch Halogen oder C₁-C₄Alkyl substituiertes Phenyl, Benzyl oder Phenethyl und m und n unabhängig voneinander Null oder 1 bedeuten,
sowie Indigoderivate der Formeln VIa oder VIb 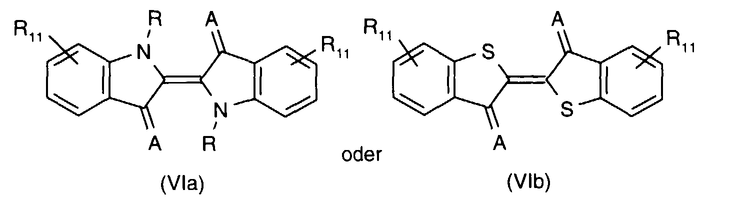 worin R₁₁ Wasserstoff, CN, C₁-C₄Alkyl, C₁-C₄Alkoxy oder Halogen bedeutet,
Isoindoline der Formeln IV oder V 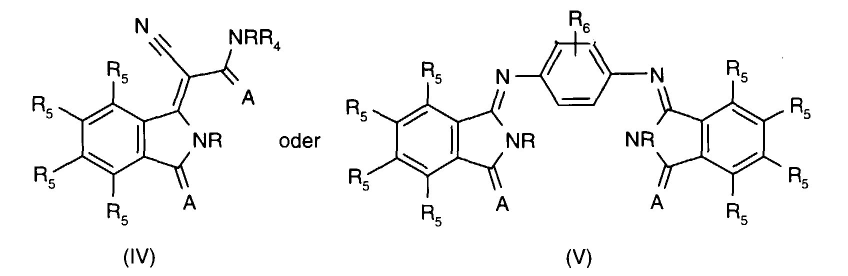 worin R₄ eine Gruppe 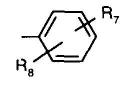 ist,
R₅ Wasserstoff oder Chlor bedeutet,
R₆ Wasserstoff, Methyl oder Chlor bedeutet,
R₇, R₈, R₉ und R₁₀ unabhängig voneinander Wasserstoff, C₁-C₁₈Alkyl, C₁-C₄Alkoxy, Halogen oder Trifluormethyl bedeuten,
sowie
bianthrachinoide Verbindungen der Formel XI

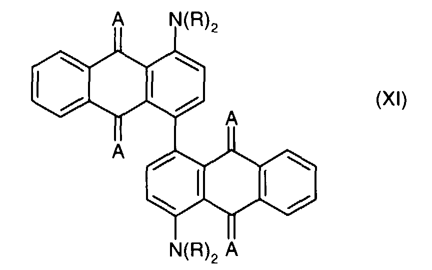

2. Verbindungen gemäss Anspruch 1, dadurch gekennzeichnet, dass es sich um Perylencarbonsäureimide der Formeln IIa oder IIb 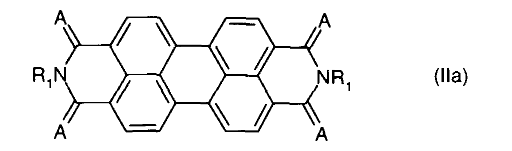 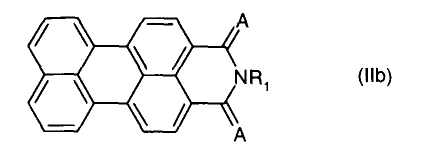 worin R₁ Wasserstoff, C₁-C₆Alkyl, unsubstituiertes oder durch Halogen oder C₁-C₄Alkyl substituiertes Phenyl, Benzyl oder Phenethyl bedeutet, und A die in Anspruch 1 angegebene Bedeutung hat, handelt.

3. Verbindungen gemäss Anspruch 1, dadurch gekennzeichnet, dass es sich um Chinacridone der Formel III 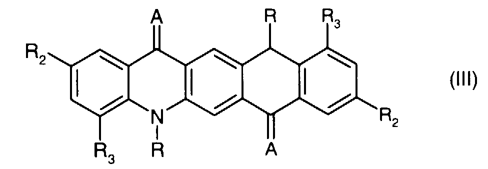 worin R₂ und R₃ unabhängig voneinander Wasserstoff, Halogen, C₁-C₁₈Alkyl, C₁-C₄Alkoxy oder Phenyl sind und A und R die in Anspruch 1 angegebene Bedeutung haben, handelt.

4. Verbindungen gemäss Anspruch 1, dadurch gekennzeichnet, dass es sich um Benzimidazolon-Azoverbindungen der Formel VII 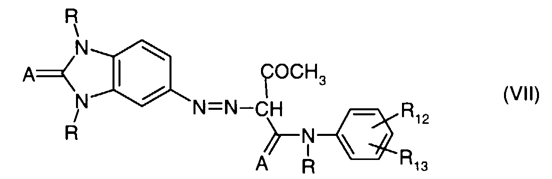 worin R₁₂ und R₁₃ unabhängig voneinander Wasserstoff, Halogen, C₁-C₄Alkyl oder C₁-C₄Alkoxy sind, und A und R die in Anspruch 1 angegebene Bedeutung haben, handelt.

5. Verbindungen gemäss Anspruch 1, dadurch gekennzeichnet, dass es sich um Benzodipyrrolone der Formeln VIIIa oder VIIIb 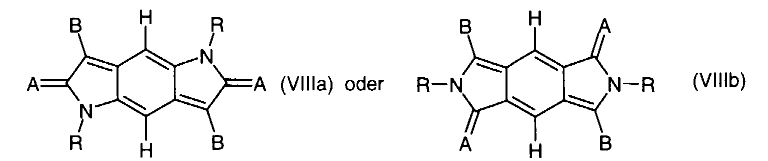 worin A, B und R die in Anspruch 1 angegebene Bedeutung haben, handelt.

6. Verbindungen gemäss Anspruch 1, dadurch gekennzeichnet, dass es sich um Benzodifuranone der Formeln IXa oder IXb 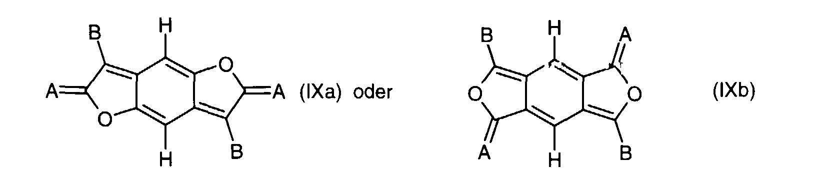 worin A und B die in Anspruch 1 angegebene Bedeutung haben, handelt.

7. Verbindungen gemäss Anspruch 2, worin R₁ Wasserstoff, C₁-C₆Alkyl, unsubstituiertes oder durch Halogen oder C₁-C₄Alkyl substituiertes Phenyl bedeutet.

8. Verbindungen gemäss Anspruch 3, worin R₂ und R₃ unabhängig voneinander Wasserstoff, Halogen, C₁-C₄Alkyl, C₁-C₄Alkoxy oder Phenyl bedeuten.

9. Indigoderivate der Formeln (VIa) oder (VIb) gemäss Anspruch 1, worin R₁₁ Wasserstoff, C₁-C₄Alkyl, C₁-C₄Alkoxy oder Halogen bedeutet.

10. Verfahren zur Herstellung von Verbindungen gemäss Anspruch 1, durch Umsetzung einer Verbindung aus der Reihe der Perylencarbonsäureimid-, Chinacridon-, Azo-, Benzodipyrrolon-, Benzodifuranon-, Furanofuran- und Pyrrolo[2,5-b]pyrrol-Chromophore der Formel X gemäss Anspruch 1, enthaltend mindestens eine Gruppierung der Formel la 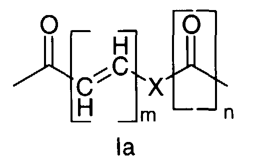 worin X, m und n wie in Anspruch 1 definiert sind,
sowie Indigoderivate der Formeln VIa' oder VIb' 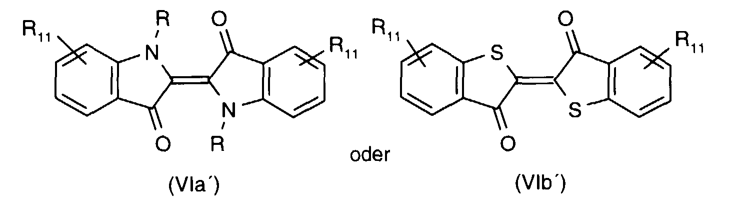 worin R₁₁ wie in Anspruch 1 definiert ist,
Isoindoline der Formeln IV' oder V' 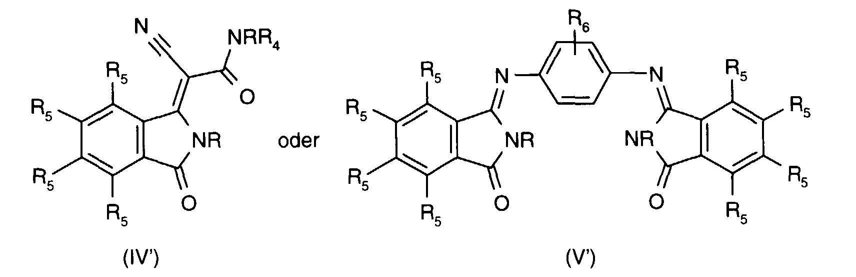 worin R₄, R₅, R₆, R₇, R₈, R₉ und R₁₀ wie in Anspruch 1 definiert sind,
sowie
bianthrachinoide Verbindungen der Formel XI' 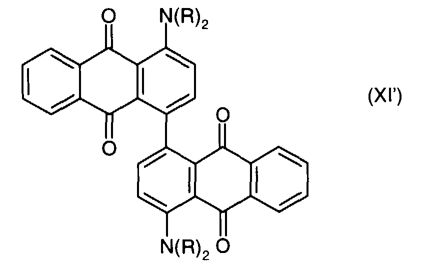 im gewünschten Molverhältnis mit einer Verbindung der Formel XII oder XIII 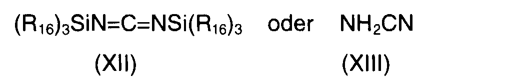 wobei R₁₆ C₁-C₆Alkyl bedeutet,
in Gegenwart einer Lewis-Säure als Katalysator in einem aprotischen organischen Lösungsmittel, bei Temperaturen zwischen 10 und 150°C.

11. Hochmolekulares organisches Material enthaltend eine Verbindung gemäss Anspruch 1.

## Claims

1. A compound from the series of the perylenecarboximide, quinacridone, azo, benzodipyrrolone, benzodifuranone, furanofuran and pyrrolo[2,5-b]pyrrole chromophores of formula X 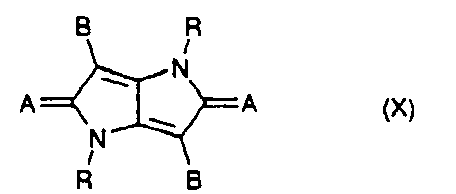 in which B is a group of formula 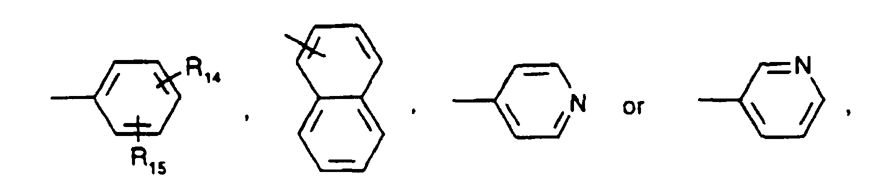 in which R₁₄ and R₁₅ independently of one another are hydrogen, chloro, bromo, C₁-C₄alkyl, C₁-C₄alkoxy, C₁-C₆alkylamino, CN or phenyl, comprising at least one grouping of formula I 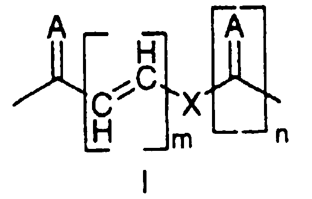 wherein each A may be N-CN or O but at least one A must be N-CN, X is -N(R)-, -O- or -S-, R is hydrogen, C₁-C₁₈alkyl, unsubstituted or halogen- or C₁-C₄alkyl-substituted phenyl, benzyl or phenethyl, and m and n are each independently of the other zero or 1,
and also indigo derivatives of formula VIa or VIb 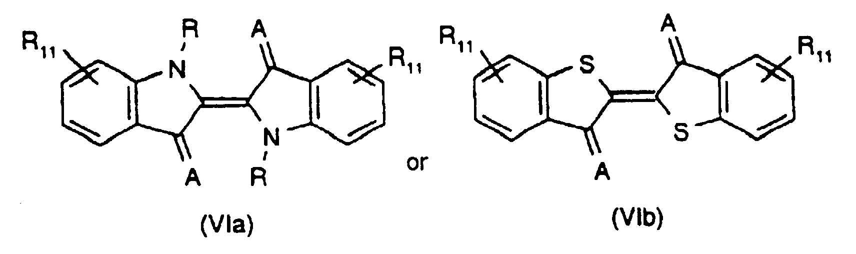 wherein R₁₁ is hydrogen, CN, C₁-C₄alkyl, C₁-C₄alkoxy or halogen,
isoindolines of formula IV or V 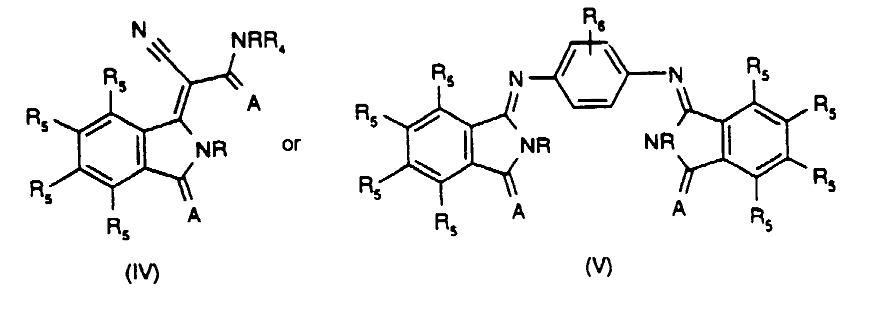 wherein R₄ is a group 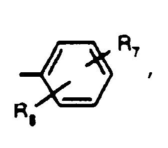
R₅ is hydrogen or chloro,
R₆ is hydrogen, methyl or chloro,
R₇, R₈, R₉ and R₁₀ are each independently of one another hydrogen, C₁-C₁₈alkyl, C₁-C₄alkoxy, halogen or trifluoromethyl,
and also
bianthraquinonoid compounds of formula XI

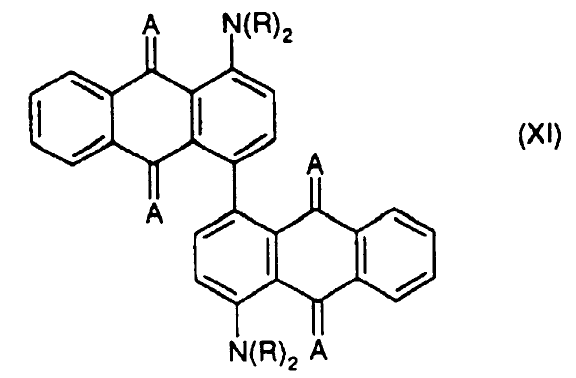

2. A compound according to claim 1, which is a perylenecarboximide of formula IIa or IIb 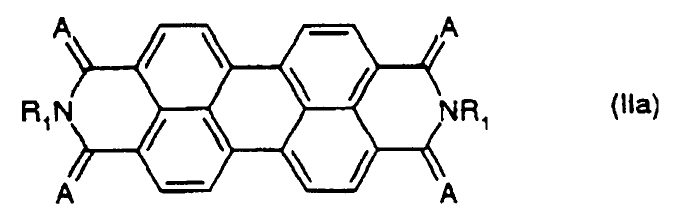 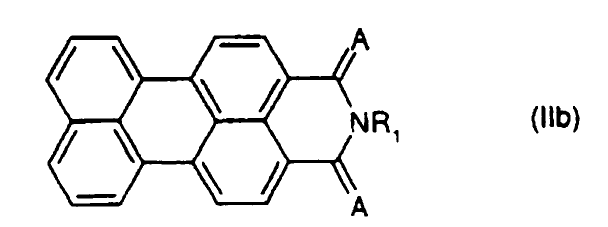 wherein R₁ is hydrogen, C₁-C₆alkyl, unsubstituted or halogen- or C₁-C₄alkyl-substituted phenyl, benzyl or phenethyl, and A is as defined in claim 1.

3. A compound according to claim 1, which is a quinacridone of formula III 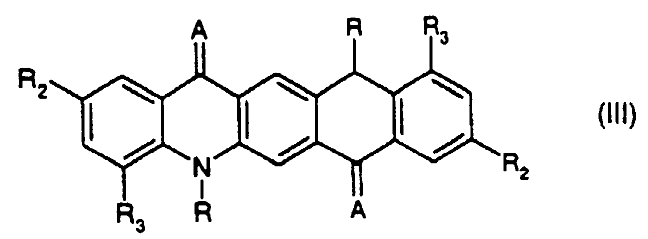 wherein R₂ and R₃ are each independently of the other hydrogen, halogen, C₁-C₁₈alkyl, C₁-C₄alkoxy or phenyl and A and R are as defined in claim 1.

4. A compound according to claim 1, which is a benzimidazolone-azo compound of formula VII 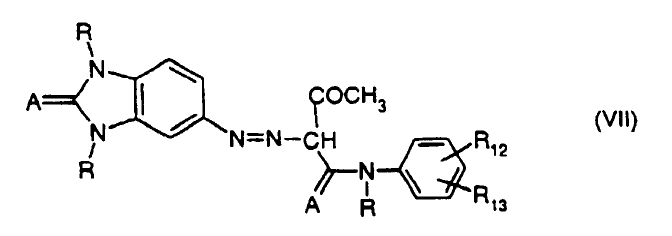 wherein R₁₂ and R₁₃ are each independently of the other hydrogen, halogen, C₁-C₄alkyl or C₁-C₄alkoxy, and A and R are as defined in claim 1.

5. A compound according to claim 1, which is a benzodipyrrolone of formula VIIIa or VIIIb 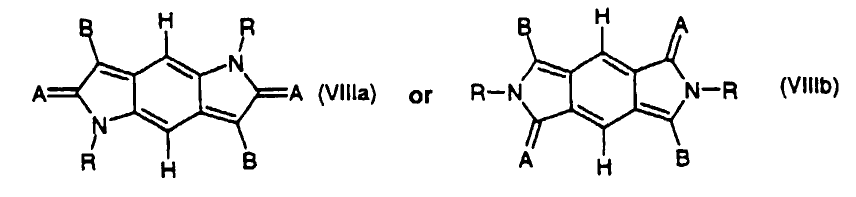 wherein A, B and R are as defined in claim 1.

6. A compound according to claim 1, which is a benzodifuranone of formula IXa or IXb 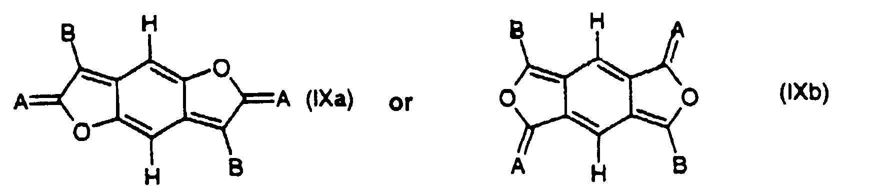 wherein A and B are as defined in claim 1.

7. A compound according to claim 2, wherein R₁ is hydrogen, C₁-C₆alkyl, unsubstituted or halogen- or C₁-C₄alkyl-substituted phenyl.

8. A compound according to claim 3, wherein R₂ and R₃ are independently of the other hydrogen, halogen, C₁-C₄alkyl, C₁-C₄alkoxy or phenyl.

9. An indigo derivative of formula (VIa) or (VIb) according to claim 1, wherein R₁₁ is hydrogen, C₁-C₄alkyl, C₁-C₄alkoxy or halogen.

10. A process for the preparation of a compound according to claim 1, by reacting a compound from the series of the perylenecarboximide, quinacridone, azo, benzodipyrrolone, benzodifuranone, furanofuran and pyrrolo[2,5-b]pyrrole chromophores of formula X according to claim 1, comprising at least one grouping of formula Ia 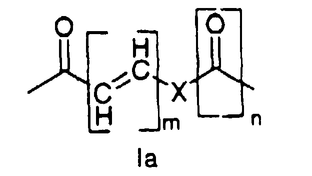 wherein X, m and n are as defined in claim 1, and also indigo derivatives of formula VIa' or VIb' 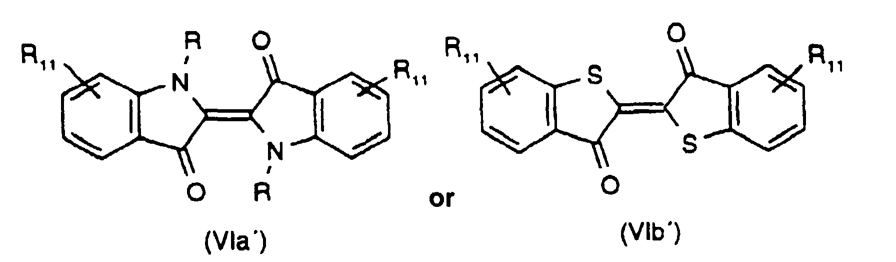 wherein R₁₁ is as defined in claim 1,
isoindolines of formula IV' or V' 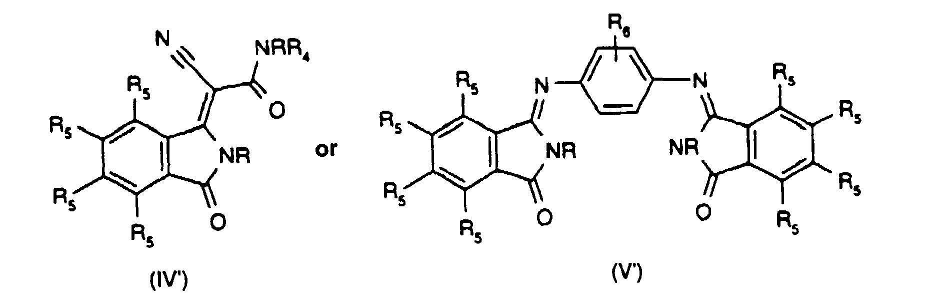 wherein R₄, R₅, R₆, R₇, R₈, R₉ and R₁₀ are as defined in claim 1, and also
bianthraquinonoid compounds of formula XI' 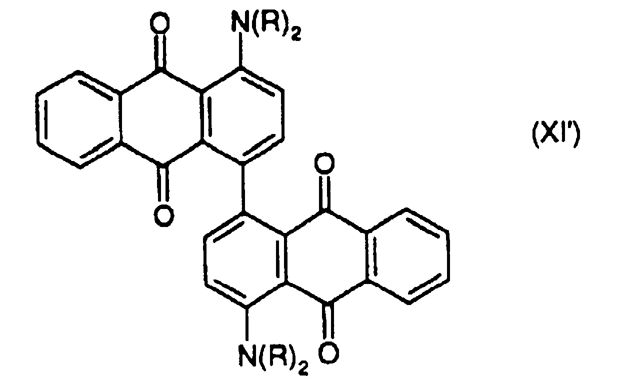 in the desired molar ratio with a compound of formula XII or XIII 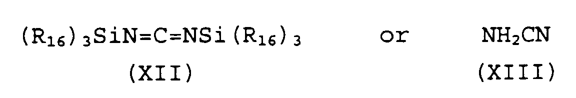 where R₁₆ is C₁-C₆alkyl,
in the presence of a Lewis acid as catalyst and in an aprotic organic solvent, at temperatures between 10 and 150°C.

11. An organic material of high molecular weight comprising a compound according to claim 1.

## Revendications

1. Composés de la famille des chromophores du type imide de l'acide pérylène carboxylique, quinacridone, azoïque, benzodipyrrolone, benzodifuranone, furanofurane et pyrrolo[2,5-b]pyrrole de formule X 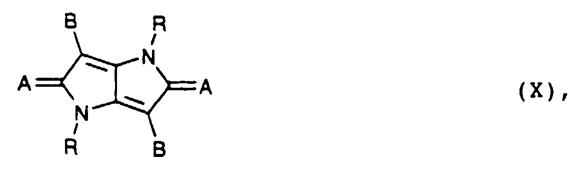 où B représente un groupe 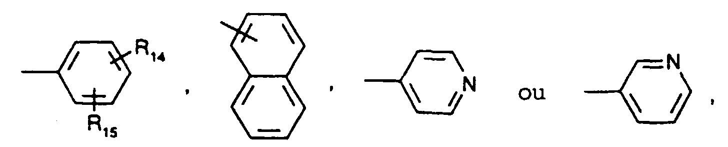 où
R₁₄ et R₁₅ représentent, indépendamment l'un de l'autre, des atomes d'hydrogène, de chlore, de brome, des groupes alkyle en C₁-C₄, alkoxy en C₁-C₄, (alkyl en C₁-C₆)amino, CN ou phényle,
contenant au moins un groupement de formule I 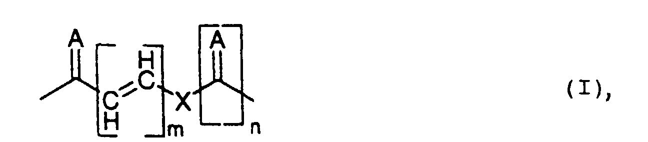 où
A peut représenter à chaque fois N-CN ou O, mais doit représenter au moins une fois le groupe N-CN,
X représente des groupes -N(R)-, -O- ou -S-,
R représente un atome d'hydrogène, des groupes alkyle en C₁-C₁₈, phényle, benzyle ou phénéthyle non substitué ou substitué par des atomes d'halogènes ou des groupes alkyle en C₁-C₄,
m et n représentent, indépendamment l'un de l'autre zéro ou 1,
ainsi que des dérivés de l'indigo de formules Via ou VIb 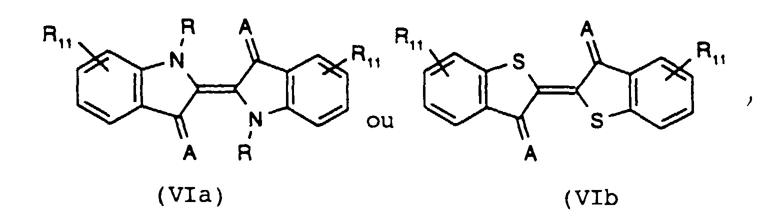 où
R₁₁ représente un atome d'hydrogène, des groupes CN, alkyle en C₁-C₄, alkoxy en C₁-C₄ ou un atome d'halogène,
des isoindolines de formules IV ou V 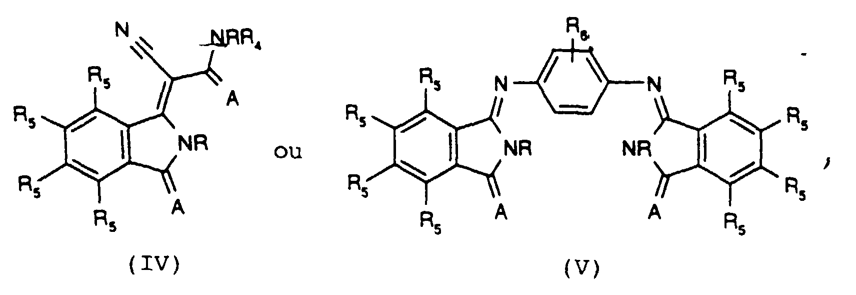 où
R₄ représente un groupe 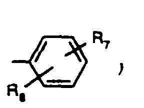
R₅ représente un atome d'hydrogène ou de chlore,
R₆ représente un atome d'hydrogène, des groupes méthyle ou chlore,
R₇, R₈, R₉ et R₁₀ représentent, indépendamment les uns des autres, des atomes d'hydrogène, des groupes alkyle en C₁-C₁₈, alkoxy en C₁-C₄, halogène ou trifluorométhyle,
ainsi que
des composés du type bianthraquinoïde de formule XI

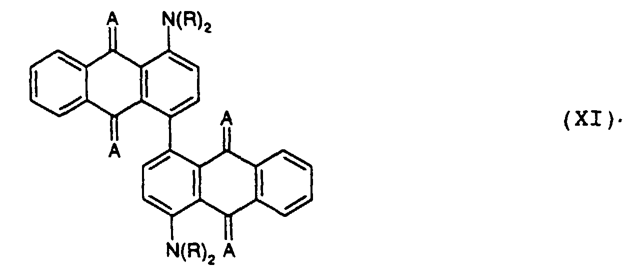

2. Composés selon la revendication 1, caractérisés en ce qu'il s'agit d'imides de l'acide pérylène carboxylique de formules IIa ou IIb 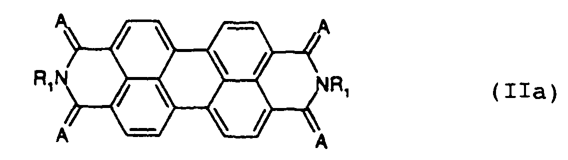 ou 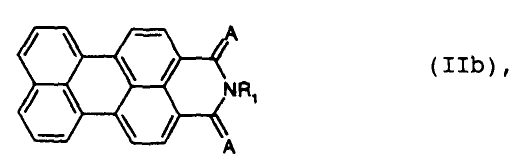 où
R₁ représente un atome d'hydrogène, des groupes alkyle en C₁-C₆ ou phényle, benzyle ou phénéthyle non substitué ou substitué par des atomes d'halogènes ou des substituants alkyle en C₁-C₄, et
A possède la signification donnée à la revendication 1.

3. Composés selon la revendication 1, caractérisés en ce qu'il s'agit de quinacridones de formule III 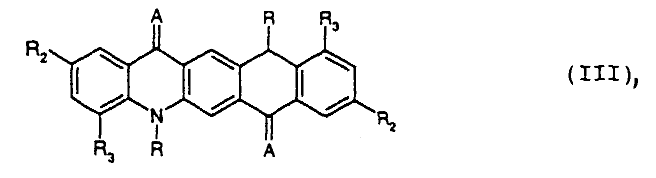 où
R₂ et R₃ représentent, indépendamment l'un de l'autre, des atomes d'hydrogène, des atomes d'halogènes, des groupes alkyle en C₁-C₁₈, alkoxy en C₁-C₄ ou phényle, et
A et R possèdent la signification donnée à la revendication 1.

4. Composés selon la revendication 1, caractérisés en ce qu'il s'agit de composés de benzimidazolone-azoïques de formule VII 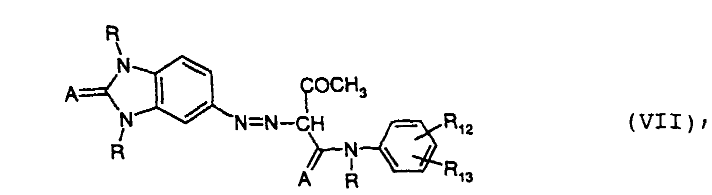 où
R₁₂ et R₁₃ représentent des atomes d'hydrogène, des atomes d'halogènes, des groupes alkyle en C₁-C₄ ou alkoxy en C₁-C₄, et
A et R possèdent la signification donnée à la revendication 1.

5. Composés selon la revendication 1, caractérisés en ce qu'il s'agit de benzodipyrrolones de formules VIIIa ou VIIIb 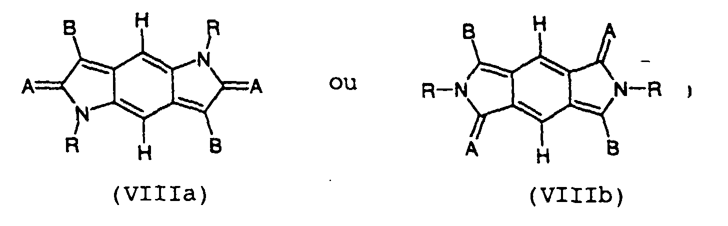 où A, B et R possèdent la signification donnée à la revendication 1.

6. Composés selon la revendication 1, caractérisés en ce qu'il s'agit de benzodifuranones de formules IXa ou IXb 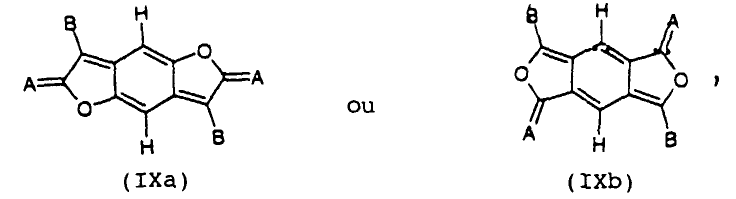 où A et B possèdent la signification donnée à la revendication 1.

7. Composés selon la revendication 2, où R₁ représente un atome d'hydrogène, des groupes alkyle en C₁-C₆, phényle non substitué ou substitué par des atomes d'halogènes ou des substituants alkyle en C₁-C₄.

8. Composés selon la revendication 3, où R₂ et R₃ représentent, indépendamment l'un de l'autre, des atomes d'hydrogène, des atomes d'halogènes, des groupes alkyle en C₁-C₄, alkoxy en C₁-C₄ ou phényle.

9. Dérives de l'indigo de formules (Via) ou (VIb) selon la revendication 1, où R₁₁ représente un atome d'hydrogène, des groupes alkyle en C₁-C₄, alkoxy en C₁-C₄ ou un atome d'halogène.

10. Procédé de préparation de composés selon la revendication 1 par transformation d'un composé de la famille des chromophores du type imide de l'acide pérylène carboxylique, quinacridone, azoïque, benzodipyrrolone, benzodifuranone, furanofurane et pyrrolo[2,5-b]pyrrole de formule X selon la revendication 1, contenant au moins un groupement de formule Ia 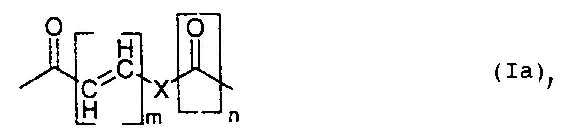 où X, m et n sont définis à la revendication 1,
ainsi que des dérivés de l'indigo de formules Via' ou VIb' 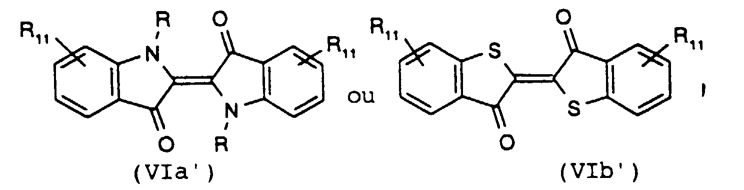 où R₁₁ est défini comme à la revendication 1,
des isoindolines de formules IV' ou V' 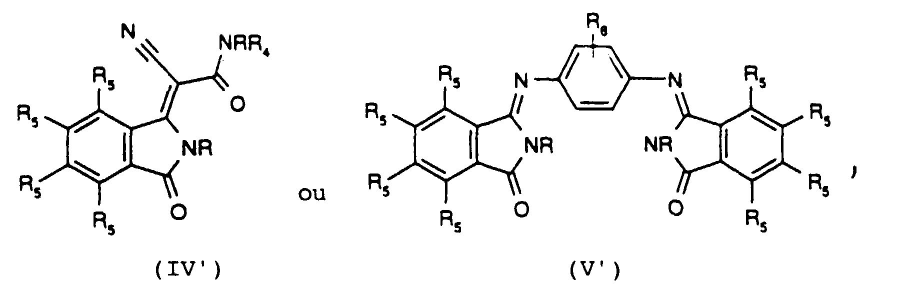 où R₄, R₅, R₆, R₇, R₈, R₉ et R₁₀ sont définis à la revendication 1,
ainsi que
des composés du type bianthraquinoïde de formule XI' 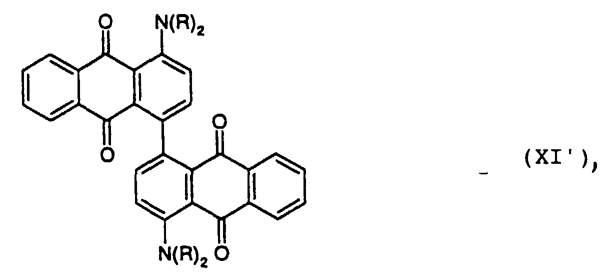 en rapports molaires voulus avec un composé de formule XII ou XIII
(R₁₆)₃SiN=C=NSi(R₁₆)₃ (XII) ou NH₂CN (XIII),
où R₁₆ représente des groupes alkyle en C₁-C₆,
en présence d'un acide de Lewis comme catalyseur, dans un solvant organique aprotique, à une température comprise entre 10 et 150°C.

11. Matière organique de haut poids moléculaire contenant un composé selon la revendication 1.
